# EUROPEAN PATENT APPLICATION

(11) **EP 2 434 720 A1**
(43) Date of publication of application: **28.03.2012**
(21) Application number: 11182331.6
(22) Date of filing: 22.09.2011
(51) Int. Cl.: H04L 29/06

(54) **Task management using a communication connection**

(30) Priority: 22.09.2010 FI 20105973
(71) Applicant: IB-Tietotaulu, 04300 Tuusula (FI)
(72) Inventor: Pellikka, Kauko, 01350 Vantaa (FI)
(74) Representative: Westerholm, Carl Christian

(57) **Abstract**

The invention concerns a method for establishing a communication connection for performing a task. The method is characterized in that it comprises the steps of a mobile reading device (104) reading a first identifier (110) from a display device (105), the mobile reading device (104) sending the read identifier together with a second identifier to an task management service running on a server computer (101), and establishing a communication connection between the task management service and a terminal device (104 or 107) based on information of the task identified by at least the first identifier. Also an arrangement, a server computer and a computer software product are disclosed.
The first identifier may be a bar code.

## Description

### TECHNICAL FIELD OF INVENTION

The invention relates to a method and arrangement for managing information related to executing a task that requires information exchange using some communication means.

### BACKGROUND OF THE INVENTION

Generally, there is sometimes a need to establish a communication connection for performing a specified task. For example, various people, who are not regular residents or users of a building, need to have occasionally access rights to a closed space within a building. Such people are e.g. building maintenance professionals, social workers visiting an elderly person, delivery person delivering on-line shopping items to a resident, etc. Obtaining the permission to perform the task, e.g. to enter a closed space of the building, may require some communication with a computer system or a person, e.g. a resident of the space.

Further, there may a need to have a sufficient degree of trust in the communication. For example, there may be a need for e.g. a resident of a building to verify, that the person who is attempting to enter a closed space is the right person authorized to enter the space to perform a specific task. For example, a resident person may need to be sure, that the delivery person attempting to enter an apartment really is the delivery person whose task is to deliver recently ordered goods to the apartment. Showing just an ID card may not be enough as such cards may be easily forged. Sometimes the resident person may not be in the apartment, but he would nevertheless allow the delivery person to enter the apartment, if he trusts the delivery person.

### OBJECT OF THE INVENTION

An object of the present invention is to provide a method and arrangement for establishing a communication connection that is usable for a person or service to perform a task.

### SUMMARY OF THE INVENTION

An aspect of the invention is a method for establishing a communication connection for performing a task. The method is characterized in that it comprises the steps of a mobile reading device reading a first identifier from a display device, the mobile reading device sending the read identifier together with a second identifier to an task management service running on a server computer, and the server computer establishing a communication connection between the task management service and a terminal device based on information of the task identified by at least the first identifier.

The first identifier may be e.g. a machine readable code, e.g. a bar code that may change in an unpredictable manner. The first identifier may have a validity period.

The mobile reading device may be e.g. a mobile phone comprising an optical input device, e.g. a digital camera.

The second identifier associated with the mobile reading device may comprise e.g. at least one of the following: the IMEI code of a mobile phone, the IMSI code of a SIM card, a caller ID of a mobile phone or other identifier that uniquely and reliably identifies a mobile phone and/or its user.

In an embodiment, the communication connection is established between the server computer and a second terminal device, where the second terminal device may be fixedly installed in a closed space.

The communication connection may be established between said mobile device and a second mobile device as a voice and/or data connection wherein the caller ID to be displayed on the second mobile device is a caller ID associable with the task management service running on the server computer. In an embodiment, the communication connection is established between the mobile device and a second mobile device as a voice connection. In another embodiment, the communication connection is a SMS connection.

In an embodiment, the caller ID of the voice connection or a text message transmitted to the second mobile device is a caller ID associated with the access management service.

In an embodiment, the method comprises a further step of generating in the server a command to execute a task.

The communication connection may be a trusted communication connection. For example, the originator of the connection, e.g. a service run on a server computer, may be trusted by the user of the end point of the connection.

The task information may comprise information necessary to execute the task. The information may thus contain e.g. access data usable for gaining access to a closed space of a building. The access data may comprise e.g. any or any combination of the following: address or identifier, e.g. apartment number, of the closed space, contact information for establishing a communication connection to a terminal device located in the closed space or to a person associated with the closed space, and PIN code needed for entering the closed space.

Another aspect of the present invention is an arrangement for establishing a communication connection to perform a task. The arrangement is characterized in that it comprises reading means in a mobile reading device for reading a first identifier from a display device associated with a location, message sending means in the mobile reading device for sending the read identifier together with a second identifier to an task management service running on a server computer and communication means in the server computer for establishing a communication connection between the server computer and a terminal device based on information of a task identified at least by the first identifier.

Yet another aspect of the present invention is a server computer, characterized in that server computer comprises means for receiving a message containing a first identifier indicating a display device and a second identifier indicating a terminal device, identifying a task from a plurality of tasks based on at least the first identifier, and establishing a communication connection between the server and at least one terminal device based on information of the identified task.

Still yet another aspect of the present invention is a computer program product stored on a computer readable media and executable on a server computer. The computer program product is characterized in that it comprises computer executable instructions for receiving a message containing an first identifier indicating a display device and an second identifier indicating a terminal device, identifying a task from a plurality of tasks based on at least the first identifier, and establishing a communication connection between the server and at least one terminal device based on information of the identified task.

Some embodiments of the invention are described herein, and further applications and adaptations of the invention will be apparent to those of ordinary skill in the art.

### BRIEF DESCRIPTION OF DRAWINGS

In the following, the invention is described in greater detail with reference to the accompanying drawings in which
Figure 1 shows an exemplary arrangement according to an embodiment of the present invention, and
Figure 2 depicts an exemplary method according to an embodiment of the present invention.

### DETAILED DESCRIPTION OF THE DRAWINGS

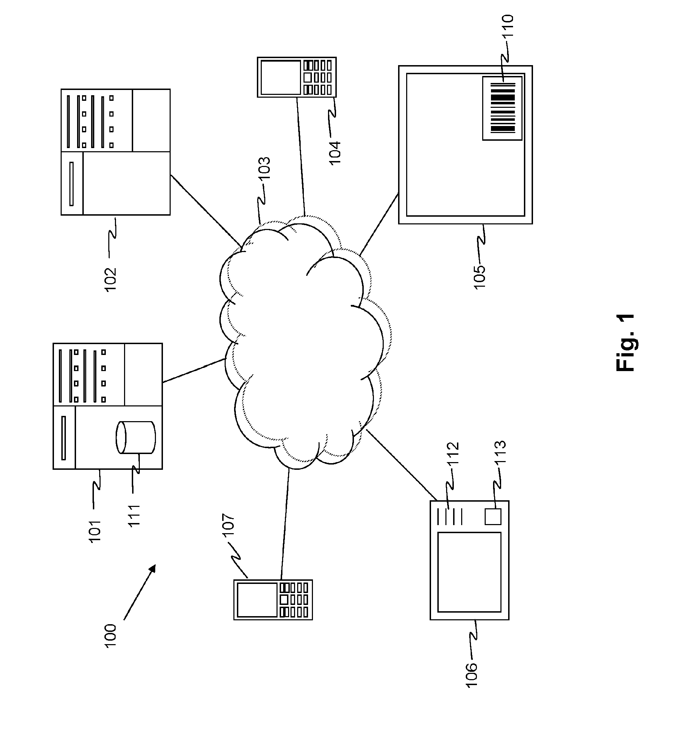

Figure 1 depicts an exemplary arrangement 100 according to an embodiment of the present invention. The arrangement comprises at least one server computer 101 which is communicatively connected to a data communication network 103, e.g. to a TCP/IP network, e.g. to Internet. The server computer 101 is adapted to receive messages from at least mobile terminal 104. The message may comprise e.g. a image of a bar code 110 that is displayed on the display device 105. Preferably, the message comprises also the identifier of the mobile terminal 104 or identifier of the user of the mobile terminal 104. The server has a data storage 111 that contains information about open tasks related to the bar code 110 shown on display device 105.

The arrangement may optionally comprise at least one second server computer 102, which interfaces with the server 101. The second server computer 102 may for example run a service that provides input to the task information of server 101. Such server may be for example a server that manages daily work activities of e.g. maintenance staff of a building.

The display device 105 is adapted to be connected to the data communication network 103 and to display information, e.g. the bar code 110, from the server 101. One suitable device is e.g. a flat panel display, e.g. a LCD screen accompanied with a suitable computer device. The display device 105 may be located e.g. in some publicly accessible place, e.g. on the exterior wall of a building or in the staircase of the building. Preferably, the bar code 110 displayed on the device changes periodically, e.g. every five minutes or every hour to a new, unpredictable code.

The mobile device 104, e.g. a mobile phone, comprises some means, e.g. a camera, for reading information, e.g. the bar code 110, from the display device 105. The device further has means to send the read code to the server 101, along with an ID identifying the device 104 or the user of the device. Such identifiers are e.g. the IMEI code of the mobile phone or the IMSI code of a SIM card residing in the mobile phone.

The arrangement 100 may further comprise at least one display device 106, that is communicatively connected to the server 101 via the communication network 103. The display device is adapted to display information from the server 101. The display device 106 may also have a loudspeaker and microphone 112 for audio communication and at least one input device 113, e.g. a push button, for issuing a command to the server 101. The input device may also be a touch screen. In an embodiment, a plurality of display devices 106 are fixedly installed in closed spaces of a building. Preferably, there is at least one lockable door between the display device 105 and the display device 106. The lock may be e.g. a remotely controllable lock.

The arrangement 100 may also comprise at least one second mobile terminal 107, that is in voice and/or data communication connection with the server 101 of the arrangement. The second mobile terminal is suitably used by a person who needs to be contacted in order to perform a task assigned to the user of the mobile terminal 104.

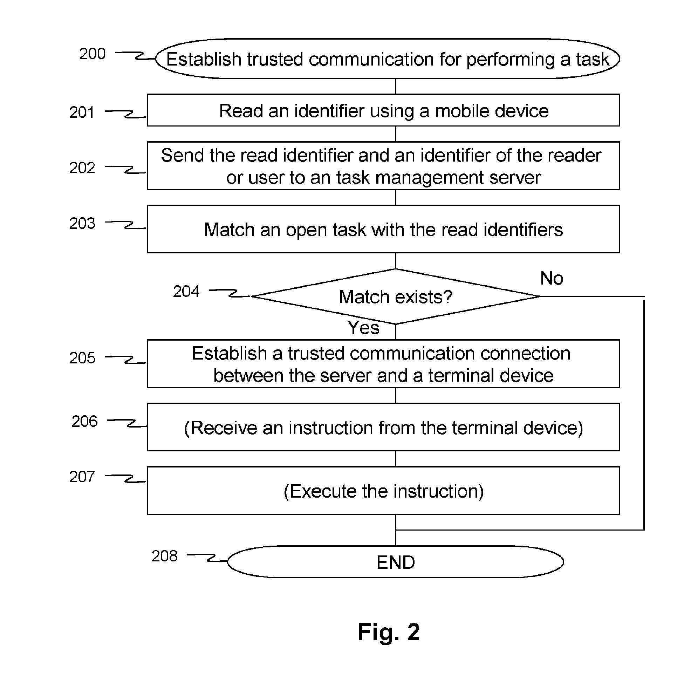

Figure 2 depicts an exemplary method 200 of a preferred embodiment of the present invention. A person, who needs to perform a task requiring an authorization, reads 201 an identifier using his/her mobile device. The person may for example be a janitor who needs to have access to an apartment for maintenance work. The person may also be e.g. a social security worker who needs to visit his/her client. As a third example, the person may be a delivery person of a grocery store, who needs to deliver groceries to an apartment. The identifier, e.g. a machine readable bar code (110 in figure 1) readable by the person is displayed on the display device (105 in figure 1). The identifier is provided by the server 101. Suitably, the identifier is a periodically changed one. For example, the bar code 110 may change every five minutes to a new, unpredictable bar code. This way, the identifier read using e.g. the camera of the mobile phone (104 in figure 1) indicates reliably the at least approximate time, when the user of the mobile terminal 104 has actually been in the location of the bar code 110. A previously recorded digital image can not thus be used in step 201. The use of a changeable ID makes it possible to ensure in a simple manner, that the person really is in the location of the ID.

Next, in step 202, the identifier read in step 201 is sent to the server computer (101 in figure 1) along with the identifier of the mobile terminal (104 in figure 1) or its user. The server computer 101 runs a task management service, where each task may contain e.g. at least some of the following information:
- ID of the location shown on the display device 105,
- ID of a person or a service, e.g. the IMSI code of a SIM card or an ID of the mobile device of a person, e.g. IMEI code of a mobile phone, or ID, e.g. an URL or URI, of a service, which is authorized to execute the task,
- Description of the task, and
- Contact information, e.g. id of a display device (106 in figure 1) or phone number of a mobile terminal (107 in figure 1) of a person required to be contacted to complete the task.

In step 203, the server computer receives the message containing the identifiers of location and person and matches any open task with the identifiers. In other words, the server checks, if there are any open tasks associated with the id 110 in the task management service that should be performed by the user of the mobile terminal 104 or for the user of the mobile terminal 104. If such match exists 204, then a trusted communication connection between the server and the terminal device is established 205.

In an embodiment, the trusted communication means that the user, with whom the communication is established by the server (101 in figure 1), can be sure that the communication comes through the server and is thus communication that is related to a specific task. If the communication is a voice call to mobile terminal 107 or 104 (or a voice call from mobile terminal 104 to terminal 107 or vice versa), the caller ID of the established call may be e.g. a caller ID associable with a service running on the server 101. Similarly, if the method of communication contains a SMS message, the caller ID of the sender of the message may be the caller ID associable with the service running on the server 101. Communication between the display device 106 and the server 101 may be trusted by allowing communication only between those devices. No other source of data may be allowed to send content to the display device 106. Thus all content rendered on the device is trusted content.

In the optional step 206, an instruction from the terminal device may be received by the server. For example, the user of the terminal device 107 may press a button of the device (e.g. the "#"-sign of a mobile phone) that authorizes the server to execute an instruction 207, e.g. to open a electronically controlled lock. The user of the terminal device may also send a code to the system that opens a numeric combination lock, when entered within a limited period of time.

In the following, some exemplary use cases are described to give examples about the various applications of the embodiments of the present invention.

In the first example, a janitor or other building maintenance person needs to enter an apartment of a building to fix a reported problem or to check the condition of some equipment. A task is created in the task management service of the server 101. The task information contains at least e.g. the following items
- Task description
- The address of the building and number of the apartment
- Phone numbers of the person(s) allowed to perform the task
- Contact information of the person living in the apartment

When the janitor arrives at the location, he shoots a picture of the bar code 110 with the camera of his cell phone 104. The picture is then sent to the server 101 in a message along e.g. with the IMSI code of the SIM card of the mobile phone using some suitable telecommunication means, e.g. MMS or e-mail message. If necessary, the message may be encrypted using some suitable encryption means. The server 101 receives the message and checks first, that the ID of the bar code is a currently active one. If the ID is not active any more, i.e. a different ID is currently shown on the display device, no action is taken. If the ID is an active one, the task management service checks, if there are open tasks for the janitor in the location indicated by the ID of the barcode 110. If no tasks are found, a message indicating an error is sent to the terminal 104. However, if there is a task for the janitor in the location, then trusted communication is established between the janitor and another person. For example, the server 101 may establish a voice call between the janitor and a resident living in the apartment to which the janitor needs to go. The caller ID of the voice call shown on the mobile phone of the resident is preferably a caller ID of a service running on the server 101. Now the resident knows with high degree of certainty, that the janitor with whom he is talking, really has an official reason to enter his apartment and that the janitor is the person is who he claims he is. Now, if the resident is in his apartment, he may allow the janitor enter the apartment. If the resident is not there, he may nevertheless open the electric lock of the apartment e.g. by pressing a key in his mobile phone 107.

In an embodiment, the communication may be established between the janitor and the resident using the display device 106 that is located in the apartment. The display device may show the description of the task and the name of the janitor and the resident may be simultaneously in voice communication with the janitor using the loudspeaker/microphone component 112 of the device 106. The resident may open the door by pressing the button 113.

In yet another embodiment, the communication between the janitor and the resident is established using SMS messages. In the message, whose caller ID indicates the service running on server 101, the task management service informs the resident about the janitor's need to enter the apartment.

In an embodiment, the trusted communication occurs between the service of the server 101 and the mobile terminal 104 of the janitor. The server may for example send in a SMS message a 4-digit code to the janitor which advantageously is valid for opening a code-locked door of the apartment for a limited period of time, e.g. for the next 5 minutes. The 4-digit code may be e.g. generated by the server or provided by the resident of the apartment. This is useful for example in situations where the resident of the apartment cannot be contacted but there still is an urgent need to enter the apartment.

The above described scenario is also applicable to other uses. For example, an embodiment of the present invention may be used by a social worker who needs to visit a client or by a delivery person delivering groceries to a customer. In both cases, it is important, that the person living in the apartment can be sure, that the person who wants to enter the apartment is who he claims to be and that he has a specific reason to do so.

An embodiment of the present invention may also be applicable as a means to establish authorized task-related communication between a customer and some business. For example, a supermarket that is located in the vicinity of a residential building having a display device 105, may want to send marketing messages via the display device to those people living in the neighborhood, who allow such messages for a (brief) period of time. The supermarket may show a brief advertisement on the display device 105 accompanied by a barcode. A person who wants to get more information about items on sale, may shoot a picture of the bar code 110 with the camera of a mobile terminal 104 and send the picture to the server 101. The server matches the bar code with a task which in this case is a marketing campaign, and establishes a communication connection with the person who sent the bar code image to the server. The person may now receive from the server 101 e.g. a SMS, multimedia or e-mail message related to the marketing campaign.

To a person skilled in the art, the foregoing exemplary embodiments illustrate the model presented in this application whereby it is possible to design different methods and arrangements, which in obvious ways to the expert, utilize the inventive idea presented in this application.

## Claims

1. A method for establishing a communication connection for performing a task, **characterized in that** method comprises the steps of
a. a mobile reading device (104) reading a first identifier (110) from a display device (105),
b. the mobile reading device (104) sending the read identifier together with a second identifier to an task management service running on a server computer (101),
c. establishing a communication connection between the task management service and a terminal device (104 or 107) based on information of the task identified by at least the first identifier.

2. A method according to claim 1, **characterized in that** said first identifier is a machine readable code (110).

3. A method according to claim 1, **characterized in that** said first identifier (110) is an unpredictably changing identifier.

4. A method according to claim 1, **characterized in that** said first identifier (110) has a validity period.

5. A method according to claim 1, **characterized in that** said mobile reading device (104) is a mobile phone comprising an optical input device.

6. A method according to claim 1, **characterized in that** said second identifier associated with the mobile reading device (104) comprises at least one of the following: the IMEI code of a mobile phone, the IMSI code of a SIM card, a caller ID of a mobile phone.

7. A method according to claim 1, **characterized in that** said communication connection is established between said server computer (101) and a second terminal device (106), the terminal device being fixedly installed in a closed space.

8. A method according to claim 1, **characterized in that** said communication connection is established between said mobile device (104) and a second mobile device (107) as a voice and/or data connection wherein the caller ID to be displayed on the second mobile device is a caller ID associable with said task management service running on said server computer (101).

9. A method according to claim 1, **characterized in that** said method comprises a further step of generating on the server (101) a command to execute a task.

10. An arrangement for establishing a communication connection to perform a task, **characterized in that** arrangement comprises
a. Reading means in a mobile reading device (104) for reading a first identifier from a display device (105) associated with a location,
b. Message sending means in the mobile reading device (104) for sending the read identifier together with a second identifier to an task management service running on a server computer (101),
c. Communication means in the server computer (101) for establishing a communication connection between the server computer and a terminal device (104 or 107) based on information of a task identified at least by the first identifier.

11. A server computer (101), **characterized in that** server computer comprises means for
a. Receiving a message containing a first identifier indicating a display device (105) and a second identifier indicating a terminal device (104),
b. Identifying a task from a plurality of tasks based on at least the first identifier, and
c. Establishing a communication connection between the server (101) and at least one terminal device (104 or 107) based on information of the identified task.

12. A computer program product stored on a computer readable media and executable on a server computer (101), **characterized in that** said computer program comprises computer executable instructions for:
a. Receiving a message containing an first identifier indicating a display device (105) and an second identifier indicating a terminal device (104),
b. Identifying a task from a plurality of tasks based on at least the first identifier, and
c. Establishing a communication connection between the server and at least one terminal device (104 or 107) based on information of the identified task.
